# EUROPÄISCHE PATENTSCHRIFT

(11) **EP 0 616 909 B1**
(45) Veröffentlichungstag und Bekanntmachung des Hinweises auf die Patenterteilung: **21.05.1997**
(21) Anmeldenummer: 94104353.1
(22) Anmeldetag: 19.03.1994
(51) Int. Cl.: B60B 33/00

(54) **Lenkrolle**
Castor wheel
Roulette pivotante

(30) Priorität: 26.03.1993 DE 9304572 U
(43) Veröffentlichungstag der Anmeldung: 28.09.1994
(73) Patentinhaber: Haussels, Berthold, 42929 Wermelskirchen-Tente (DE)
(72) Erfinder: Haussels, Berthold, 42929 Wermelskirchen-Tente (DE)
(74) Vertreter: Eichler, Peter, Dipl.-Ing.

(56) Entgegenhaltungen:
- EP-A- 0 440 068
- DE-U- 9 012 529
- FR-A- 2 253 940
- GB-A- 1 150 617
- PATENT ABSTRACTS OF JAPAN vol. 9, no. 297 (M-432) 25. November 1985 & JP-A-60 135 304 (NANSHIN GOMU KOGYOSHO) 18. Juli 1985

## Beschreibung

Die Erfindung betrifft eine Lenkrolle für damit verfahrbar auszurüstende Geräte, wie z.B. Müllcontainer, Krankenbetten od.dgl., mit einer das Laufrad tragenden Lenkrollengabel und einem an deren Rücken angebrachten sowie am Gerät zu befestigenden Schwenklager, das aus einem Schwenklagertopf und einer darin über einen oberen und unteren Kugellaufkranz schwenkbeweglich gelagerten Schwenklagerplatte besteht, wobei der aus Stahlblech geformte Schwenklagertopf zumindest in seinem im wesentlichen zylindrischen Wandungsbereich von einer Außenverstärkungsschicht umgeben ist.

Eine Lenkrolle obiger Art ist durch das DE-GM 90 12 529 bekannt. Die dabei den Schwenklagertopf entweder ganz oder auch nur bereichsweise umgebende Außenverstärkungsschicht besteht aus einem auf dem Schwenklagertopf aufgeschweißten oder aufgenieteten, entsprechend geformten Stahlblech. Dadurch kann das Schwenklager größeren und dauerhafteren Beanspruchungen ausgesetzt werden, ohne daß dabei in den die Schwenkbeweglichkeit gewährleistenden Kugelkränzen Laufmängel auftreten. Das ist vor allem für solche Schwenklager von Bedeutung, bei denen herstellungsmäßig in den entsprechend vorgeformten, noch mit einer durchgehend zylindrischen Wandung versehenen Schwenklagertopf zunächst die Lagerkugeln und die Schwenklagerplatte eingebracht und erst danach die Topfwandung am offenen freien Rand um 90° und mehr nach innen umgebördelt werden. Dabei kann das Umbördeln sehr sorgfältig vorgenommen werden, so daß dadurch die Laufkugeln ihr bestmögliches Bewegungsspiel erhalten und dadurch besonders gute Laufeigenschaften des Schwenklagers erzielt werden, wobei aber das Umbördeln voraussetzt, daß dabei der Schwenklagertopf eine bestimmte Wandstärke nicht überschreitet. Hier schafft die Außenverstärkungsschicht Abhilfe bezüglich der Lastabtragfähigkeit des Schwenklagers. Das Aufbringen und Befestigen der stählernen Außenverstärkungsschicht auf dem Schwenklagertopf bedingt aber noch einen nicht unerheblichen Montageaufwand, zumal dabei eine entsprechende Formgebung des Verstärkungsblechs Voraussetzung ist. Auch wird dadurch die Korrosionsbeständigkeit des Schwenklagers nicht verbessert. Darüber hinaus erschwert das glattwandige Außenverstärkungsblech das Anbringen der bei solchen Lenkrollen vielfach notwendigen Arretiermittel, sofern es sich dabei nicht gerade um zentral feststellbare Lenkrollen handelt.

Der Erfindung liegt daher die Aufgabe zugrunde, eine Lenkrolle der eingangs erwähnten Gattung dahingehend zu verbessern und zu vervollkommnen, daß die den Schwenklagertopf umgebende Außenverstärkungsschicht darauf wesentlich leichter angebracht werden kann und darüber hinaus auch noch einen zusätzlichen Korrosionsschutz sowie wesentlich verbesserte Anbringemöglichkeiten für Lenkrollen-Arretiermittel bietet.

Diese Aufgabe wird bei einer Lenkrolle der gattungsgemässen Art erfindungsgemäß dadurch gelöst, daß die Außenverstärkungsschicht aus einer auf den Schwenklagertopf im Spritz- oder Preßgußverfahren aufgebrachten Druckgußschicht aus Kunststoff oder einer Leichtmetall-Legierung besteht.

Eine solche Druckgußschicht kann in einer entsprechenden Gußform auf dem Schwenklagertopf und ggfs. auch auf den damit fest verbundenen, angrenzenden Partien verhältnismäßig einfach und auch dauerhaft fest aufgebracht werden, wodurch nicht nur der Schwenklagertopf eine entsprechende Verstärkung erhält, sondern zugleich auch noch einen wirksamen Oberflächenschutz, insbesondere auch gegen Korrosion erfährt. Zugleich bietet die den Schwenklagertopf umgebende Druckgußschicht die Möglichkeit, bereits beim Druckguß entsprechende Abschlußelemente für Lenkrollen-Arretiermittel, z.B. Zahnkränze oder Lagervorsprünge für Arretierhebel anzuformen. Als besonders vorteilhaft hat es sich erwiesen, wenn die auf den Schwenklagertopf aufgespritzte Druckgußschicht aus thermoplastischem Kunststoff, insbesondere Polyamid, Polypropylen, Polyvinylchlorid oder Polyäthylen besteht. Grundsätzlich ist als Druckgußschicht aber auch eine Leichtmetall-, insbesondere Alu-Legierung, wie z.B. Zamak dafür geeignet. Bei der vergleichsweise unkomplizierten Oberflächengestalt des Schwenklagertopfes und seiner angrenzenden Teile können die zum Druckgießen insbesondere Spritzgießen notwendigen Formen vergleichsweise einfach, zumeist nur zweiteilig gehalten bzw. ausgebildet werden.

Sofern der Schwenklagertopf am Gerät verdrehungsfest zu befestigen ist und daher die aus dessen unten liegender Öffnung herausragende Schwenklagerplatte mit der Lenkrollengabel fest verbunden ist, kann auf der Oberseite der den Schwenklagertopf umgreifenden Druckgußschicht zugleich auch ein aus Druckguß bestehender Einsteckbefestigungszapfen für das Einstecken in einen Gerätehohlfuß angeformt sein. Ggfs. kann darin auch noch ein auf dem Schwenklagertopfboden befestigter metallischer Verstärkungszapfen miteingeformt sein.

Sofern am Schwenklagertopf eine für dessen geräteseitige verdrehungsfeste Anbringung befestigte und seitlich über den Topf hinausragende Befestigungsplatte vorhanden ist, die mittig eine flach auf dem Schwenklagertopfboden aufliegende muldenförmige Vertiefung aufweist, wird vorzugsweise auch die muldenförmige Vertiefung von der Druckgußschicht ausgefüllt, die dann über in der Befestigungsplatte vorhandene Durchtrittsöffnungen mit dem die Schwenklagertopfwandung umgebenden übrigen Bereich der Druckgußschicht verbunden ist.

Sofern der Schwenklagertopf an der Lenkrollengabel befestigt und die aus seiner oben gelegenen Öffnung herausragende Schwenklagerplatte mit dem Gerät verdrehungsfest zu verbinden ist, kann die die Schwenklagertopfwandung umgebende Druckgußschicht vorteilhaft auch noch den Lenkrollengabelrücken umgreifen. Noch besser ist es, wenn die Druckgußschicht in diesem Falle einen den Lenkrollengabelrücken auch unterseitig hintergreifenden Bereich besitzt, der mit dem übrigen Bereich der Druckgußschicht über im Lenkrollengabelrücken vorhandene Durchtrittsöffnungen verbunden ist. Auch in diesem Falle ist ein einfaches Umspritzen des Lenkrollen-Schwenklagertopfes einschließlich des Lenkrollen-Gabelrückens ohne weiteres möglich.

Schließlich kann bei geeigneter Auswahl der Spritz- oder Preßgußmasse auch die Lenkrollengabel zur Gänze oder teilweise aus entsprechendem Druckguß bestehen und zusammen mit der den Schwenklagertopf umgebenden Druckgußschicht einheitlich angespritzt oder angegossen werden.

In der Zeichnung sind mehrere Ausführungsbeispiele erfindungsgemäß beschaffener Lenkrollen dargestellt. Dabei zeigen die
- Fig.1 bis 4: in jeweils teilweise geschnittener Seitenansicht vier Ausführungsformen, bei denen der Schwenklagertopf geräteseitig zu befestigen ist und daher die in ihm enthaltene Schwenklagerplatte mit der Lenkrollengabel verdrehungsfest verbunden ist, wohingegen die
- Fig.5 bis 7: entsprechende Teilschnittdarstellungen von Lenkrollen-Ausführungsformen wiedergibt, bei denen jedoch die Schwenklagerplatte geräteseitig, der Schwenklagertopf also mit der Lenkrollengabel drehfest verbunden ist, und
- Fig.8: eine vereinfachte Stirnansicht der Fig.7 ohne Lenkrollen-Laufrad.

Allen in der Zeichnung dargestellten Lenkrollen ist gemeinsam, daß sie eine das strichpunktiert angedeutete Laufrad 1 tragende Lenkrollengabel 2 besitzen, die über ein generell mit 3 bezeichnetes Schwenklager mit dem damit auszurüstenden Gerät um eine vertikale Achse 4 schwenkbeweglich zu verbinden ist. Das Schwenklager 3 besteht dabei jeweils aus einem Schwenklagertopf 5 und einer darin über einen oberen und unteren Kugellaufkranz 6,6' schwenkbeweglich gelagerten Schwenklagerplatte 7. Der Schwenklagertopf 5 besitzt einen Boden 5' und eine im wesentlichen zylindrische Topfwandung 5''. Bei der Herstellung des Schwenklagers werden in den Schwenklagertopf 5 bei zunächst durchweg glatt zylindrischer Wandung 5'' der obere Kugellaufkranz 6, sodann die Schwenklagerplatte 7 und dann der untere Kugellaufkranz 6' eingebracht und erst dann der Topfwandungsrand 5''' entsprechend weit nach innen umgebördelt.

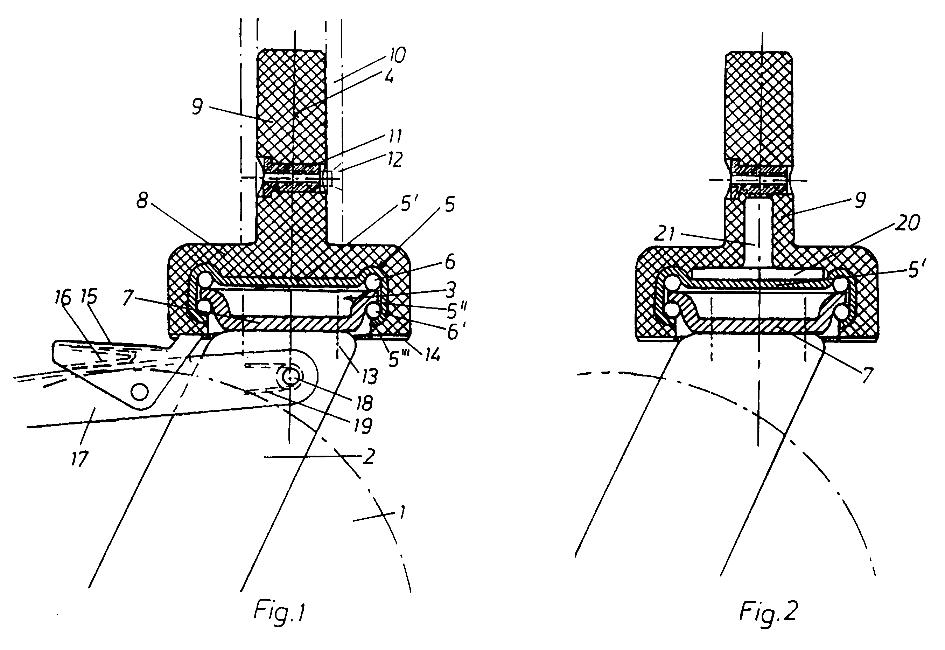

Im Falle der Fig.1 ist der aus entsprechend geformtem Stahlblech bestehende Schwenklagertopf 5 sowohl ringsum als auch im Bereich seines Bodens 5' von einer vorzugsweise aus Spritzkunststoff bestehenden Druckgußschicht 8 umgeben, die hier zugleich mit einem aus entsprechendem Spritzkunststoff bestehenden angeformten Einsteckbefestigungszapfen 9 versehen ist. Über diesen Einsteckzapfen 9 kann die Lenkrolle in dem strichpunktiert angedeuteten Hohlfuß 10 des Geräts, beispielsweise eines Müllcontainers oder auch Krankenbettes, befestigt werden. Dazu dient weiterhin die im Einsteckbefestigungszapfen 9 eingebrachte, querliegende Innengewindebüchse 11, in die eine am Gerätefuß 10 vorhandene Befestigungsschraube 12 eingedreht werden kann.

Zum Aufbringen der Druckgußschicht 8 und des an ihr angeformten Einsteckzapfens 9 wird das Schwenklager 3 in eine entsprechend unterteilte Spritzgußform gebracht und von der entsprechenden Kunststoffmasse, einem geeigneten thermoplastischen Kunststoff, wie insbesondere Polyamid od.dgl. fest umspritzt. Danach kann über die nur strichpunktiert angedeuteten Schraubstellen 13 die Lenkrollengabel 2 mitsamt dem Laufrad 1 an der Schwenklagerplatte 7 angebracht werden.

Beim Anspritzen der den Schwenklagertopf voll umgreifenden Spritzkunststoffschicht 8 kann zugleich auch bei entsprechender Formausbildung im unteren Rand der Druckgußschicht 8 ein Zahnkranz 14 angeformt werden, über den in Verbindung mit dem Arretierhebel 15 die Schwenkverstellbeweglichkeit der Lenkrollengabel 2 blockiert werden kann. Hierzu kann der Arretierhebel 15 beispielsweise unter Zwischenschaltung der Feder 16 auf dem Radbremshebel 17 gelagert sein, der seinerseits an der Stelle 18 an der Lenkrollengabel 2 schwenkbeweglich gelagert und mittels einer Torsionsfeder 19 in einer angehobenen Ausrückstellung zu halten ist, sofern der Arretierhebel 15 aus der in Fig.1 dargestellten Arretierposition durch Fußbetätigung entgegen dem Uhrzeigersinn verschwenkt wird, so daß dann sowohl die Schwenkbeweglichkeit der Gabel 2 als auch die Drehbeweglichkeit des Rades 1 freigegeben werden. Wird dagegen der Bremshebel 17 durch Fußbetätigung nach unten gedrückt, so wird dadurch nicht nur das Rad 1 entsprechend gebremst, sondern durch Verschwenken des Arretierhebels 15 im Uhrzeigersinn auch dessen Eingriff in den Zahnkranz 14 bewirkt.

Die in Fig.2 dargestellte Ausführungsform unterscheidet sich von der vorbeschriebenen nur insoweit, als dabei im angeformten Einsteckbefestigungszapfen 9 noch ein auf dem Schwenklagertopfboden 5' mittels einer Zwischenplatte 20 befestigter metallischer Verstärkungszapfen 21 miteingeformt ist.

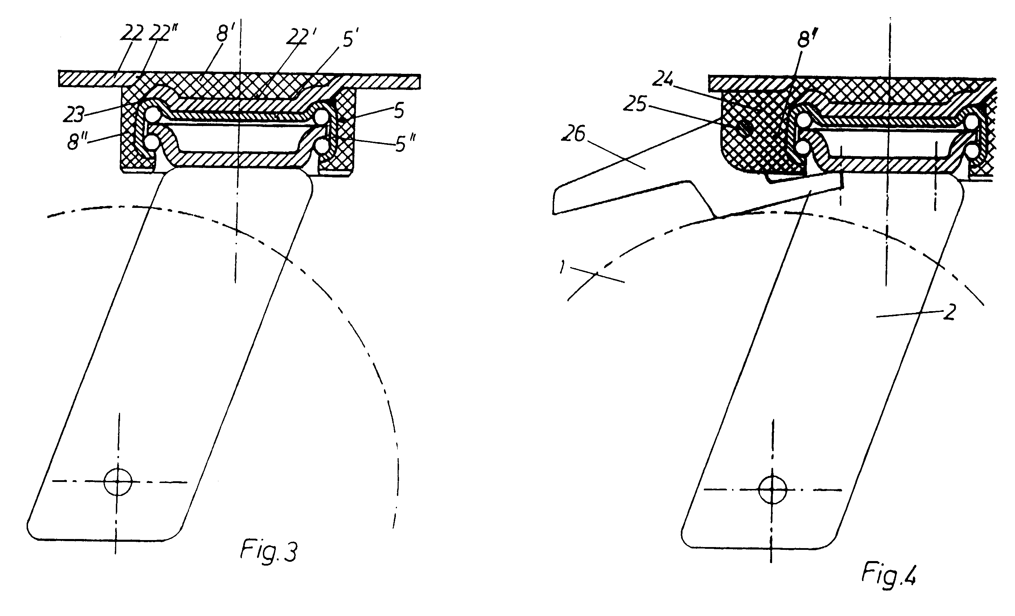

Die in den Fig.3 und 4 dargestellten Ausführungsbeispiele sind für eine Flachbefestigung des Schwenklagers am Gerät bestimmt. Hier ist am Schwenklagertopf 5 für diese geräteseitige Anbringung eine seitlich über ihn hinausragende metallische Befestigungsplatte 22 vorhanden, die mittig eine flach auf dem Schwenklagertopfboden 5' aufliegende, muldenförmige Vertiefung 22' aufweist und die mit dem Schwenklagertopf 5 über die Schweißnaht 23 fest verbunden ist. In diesem Falle ist auch die muldenförmige Vertiefung 22' von der Druckgußschicht 8' voll ausgefüllt, so daß sich oben ein glattwandiger bündiger Verlauf zwischen dieser Druckgußschicht 8' und der Befestigungsplatte 22 ergibt. Dieser Bereich 8' ist mit dem die Schwenklagertopfwandung 5'' umgebenden übrigen Bereich 8'' der Druckgußschicht über mehrere in der Befestigungsplatte ringsum verteilt angeordnete Durchtrittsöffnungen 22'' verbunden, so daß auch in diesem Falle beide Bereiche 8',8'' gleichzeitig um den Schwenklagertopf 5 und dessen Befestigungsplatte 22 herum gespritzt werden können.

Die in Fig.4 dargestellte Ausführungsform unterscheidet sich von der in Fig.3 dargestellten nur insoweit, als hier im Bereich 8'' der Druckgußschicht noch ein besonderer Lagervorsprung 24 für den daran um den Zapfen 25 schwenkbeweglich anzubringenden Arretierhebel 26 angeformt ist. Über diesen Hebel 26 können auch hier in nicht näher dargestellter Weise das Laufrad 1 in seiner Drehbeweglichkeit und die Lenkrollengabel 2 in ihrer Schwenkbeweglichkeit arretiert werden.

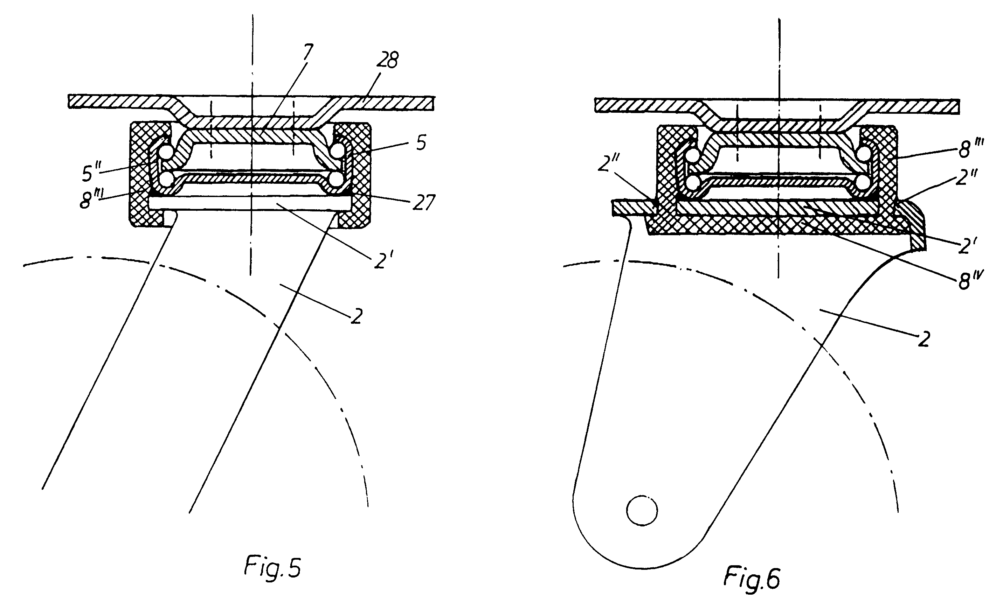

Im Falle der Fig.5 ist der Schwenklagertopf 5 mit dem Rücken 2' der Lenkrollengabel 2 drehfest verbunden, beispielsweise über die Schweißnaht 27. Demgegenüber ist die Schwenklagerplatte 7 hier über eine mittig wiederum muldenförmig vertiefte Befestigungsplatte 28 mit dem Gerät fest zu verbinden. In diesem Falle erstreckt sich die Druckgußschicht 8''' nicht nur über den Bereich der Schwenklager-Topfwandung 5'' sondern auch noch über den Lenkrollengabelrücken 2', den sie unterseitig umgreift.

Bei der in Fig.6 dargestellten Ausführungsform, die im wesentlichen der Fig.5 entspricht, besitzt die Druckgußschicht einen den Lenkrollengabelrücken 2' sogar unterseitig hintergreifenden Bereich 8^{IV}, der mit dem übrigen Bereich 8''' der Druckgußschicht über im Lenkrollengabelrücken 2' vorhandene Durchtrittsöffnungen 2'' verbunden ist. Auch in diesem Falle ergibt sich eine vergleichsweise leicht herzustellende und dennoch großflächige Umspritzung des Schwenklagers unter Einschluß des Lenkrollengabelrückens 2'.

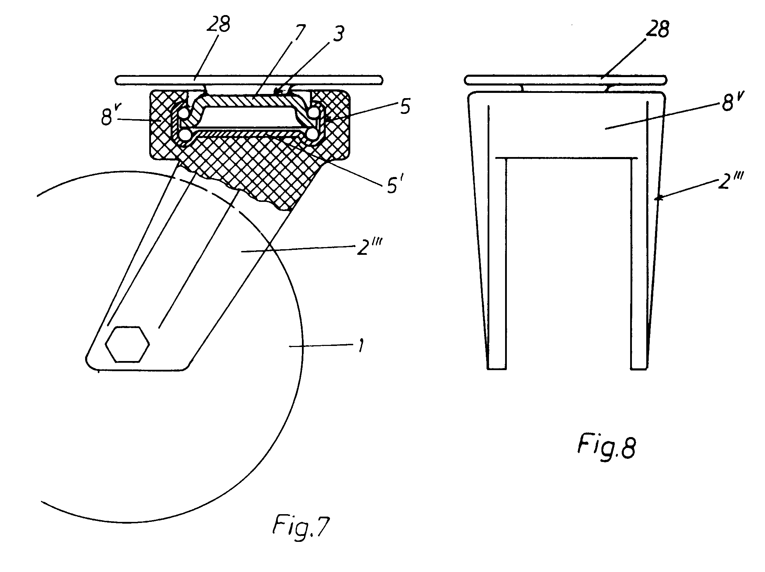

Die Fig.7 und 8 zeigen schließlich eine Ausführungsform, bei der die Lenkrollengabel 2''' zur Gänze aus Druckguß besteht und zusammen mit der den Schwenklagertopf 5 umgebenden Druckgußschicht 8^{V} einheitlich angespritzt oder angegossen ist. Wie die Praxis gezeigt hat, kommt man bei entsprechender Wahl des Druckguß-Werkstoffes, beispielsweise wenn dafür als Spritzkunststoff Polyamid verwendet wird, zu einer durchaus tragfähigen Lenkrollengabel 2''', die in einer entsprechend mehrteilig ausgebildeten Spritzgußform vergleichsweise leicht und äußerst verbindungsinnig mit dem stählernen Schwenklagertopf 5 des Schwenklagers 3 umspritzt werden kann, dessen Schwenklagerplatte 7 hier auch über eine entsprechend gestaltete Befestigungsplatte 28 und darin sitzende entsprechende Schraubbefestigungslöcher mit dem Gerät drehfest zu verbinden ist.

## Patentansprüche

1. Lenkrolle für damit verfahrbar auszurüstende Geräte, wie z.B. Müllcontainer, Krankenbetten od.dgl., mit einer das Laufrad (1) tragenden Lenkrollengabel (2) und einem an deren Rücken (2') angebrachten sowie am Gerät zu befestigenden Schwenklager (3), das aus einem Schwenklagertopf (5) und einer darin über einen oberen und unteren Kugellaufkranz (6,6') schwenkbeweglich gelagerten Schwenklagerplatte (7) besteht, wobei der aus Stahlblech geformte Schwenklagertopf (5) zumindest in seinem im wesentlichen zylindrischen Wandungsbereich (5'') von einer Außenverstärkungsschicht (8) umgeben ist, **dadurch gekennzeichnet**, daß die Außenverstärkungsschicht aus einer auf den Schwenklagertopf (5) im Spritz- oder Preßgußverfahren aufgebrachten Druckgußschicht (8) aus Kunststoff oder einer Leichtmetall-Legierung besteht.

2. Lenkrolle nach Anspruch 1, **dadurch gekennzeichnet**, daß die auf den Schwenklagertopf (5) aufgespritzte Druckgußschicht (8) aus thermoplastischem Kunststoff, insbesondere Polyamid, Polypropylen, Polyvinylchlorid oder Polyäthylen besteht.

3. Lenkrolle nach Anspruch 1, **dadurch gekennzeichnet**, daß die auf den Schwenklagertopf (5) aufgepreßte Druckgußschicht aus einer Alu-Legierung, z.B. Zamak besteht.

4. Lenkrolle nach einem der Ansprüche 1 bis 3, **dadurch gekennzeichnet**, daß an der Druckgußschicht (8'') Anschlußelemente für Lenkrollen-Arretiermittel, z.B. Zahnkränze (14) oder Lagervorsprünge (24) für Arretierhebel (15 bzw. 26) angeformt sind.

5. Lenkrolle nach einem der Ansprüche 1 bis 4, **dadurch gekennzeichnet**, daß die Druckgußschicht (8) auch den Boden (5') des Schwenklagertopfes (5) umgibt.

6. Lenkrolle nach einem der Ansprüche 1 bis 5, bei der der Schwenklagertopf (5) am Gerät verdrehungsfest zu befestigen und die aus dessen unten liegender Öffnung herausragende Schwenklagerplatte (7) mit der Lenkrollengabel (2) fest verbunden ist, **dadurch gekennzeichnet**, daß auf der Oberseite der den Schwenklagertopf (5) umgreifenden Druckgußschicht (8) ein auch aus Druckguß bestehender Einsteckbefestigungszapfen (9) angeformt ist.

7. Lenkrolle nach Anspruch 6, **dadurch gekennzeichnet**, daß im angeformten Einsteckbefestigungszapfen (9) eine querliegende Innengewindebüchse (11) für eine darin eingreifende, am Gerätefuß (10) vorgesehene Befestigungsschraube (12) vorgesehen ist.

8. Lenkrolle nach Anspruch 6, **dadurch gekennzeichnet**, daß im angeformten Einsteckbefestigungszapfen (9) ein auf dem Schwenklagertopfboden (5') befestigter metallischer Verstärkungszapfen (21) miteingeformt ist.

9. Lenkrolle nach einem der Ansprüche 1 bis 5, mit einer am Schwenklagertopf (5) für dessen geräteseitige verdrehungsfeste Anbringung befestigten und seitlich über den Topf hinausragenden Befestigungsplatte (22), die mittig eine flach auf dem Schwenklagertopfboden (5') aufliegende muldenförmige Vertiefung (22') aufweist, **dadurch gekennzeichnet**, daß auch die muldenförmige Vertiefung (22') von der Druckgußschicht (8') ausgefüllt ist und diese über in der Befestigungsplatte (22) vorhandene Durchtrittsöffnungen (22'') mit dem die Schwenklagertopfwandung (5'') umgebenden übrigen Bereich (8'') der Druckgußschicht verbunden ist.

10. Lenkrolle nach einem der Ansprüche 1 bis 5, bei der der Schwenklagertopf (5) an der Lenkrollengabel (2) befestigt und die aus seiner oben gelegenen Öffnung herausragende Schwenklagerplatte (7) mit dem Gerät verdrehungsfest zu verbinden ist, **dadurch gekennzeichnet**, daß die die Schwenklagertopfwandung (5'') umgebende Druckgußschicht (8''') auch noch den Lenkrollengabelrücken (2') umgreift.

11. Lenkrolle nach Anspruch 10, **dadurch gekennzeichnet**, daß die Druckgußschicht einen den Lenkrollengabelrücken (2') auch unterseitig hintergreifenden Bereich (8^{IV}) besitzt, der mit dem übrigen Bereich (8''') der Druckgußschicht über im Lenkrollengabelrücken (2') vorhandene Durchtrittsöffnungen (2'') verbunden ist.

12. Lenkrolle nach Anspruch 10, **dadurch gekennzeichnet**, daß die Lenkrollengabel (2''') ganz oder teilweise aus Druckguß besteht und zusammen mit der den Schwenklagertopf (5) umgebenden Druckgußschicht (8^{V}) einheitlich angespritzt oder angegossen ist.

## Claims

1. Caster for fitting to devices, appliances, items of equipment etc. (hereafter devices), such as refuse containers, hospital beds and similar items, to be enable these to be moved, the caster having a caster fork (2) carrying the running wheel (1) and a swivel bearing (3), this being fitted to the saddle (2') of the above-mentioned fork and for securing to the device, the swivel bearing consisting of a swivel bearing pot (5) and a swivel bearing plate (7) mounted therein in such a manner that the latter can rotate with the aid of an upper (6) and a lower (6') ball race, whereby the swivel bearing pot (5), which is made of shaped steel sheet, is surrounded by an external reinforcing layer (8) at least in that region of its wall that is essentially cylindrical (5''), characterized by the fact that the external reinforcing layer consists of a die-cast layer (8) of plastic or light-metal alloy applied to the swivel bearing pot (5) by injection moulding or pressure casting.

2. Caster in accordance with claim 1 characterized by the fact that the die-cast layer (8) applied to the swivel bearing pot (5) is of a thermoplastic plastic and in particular of polyamide, polypropylene, polyvinyl chloride or polyethylene.

3. Caster in accordance with claim 1 characterized by the fact that the die-cast layer pressed on to the swivel bearing pot (5) is of an aluminium alloy such as Zamak.

4. Caster in accordance with claims 1 to 3 characterized by the fact that mounting elements for devices for locking the caster such as toothed rims (14) or mounting shoulders (24) for locking levers (15 and 26 respectively) are jointly moulded with the die-cast layer (8'').

5. Caster in accordance with claims 1 to 4 characterized by the fact that the die-cast layer (8) also embraces the base (5') of the swivel bearing pot (5).

6. Caster in accordance with claims 1 to 5 in which the swivel bearing pot (5) is secured to the device in such a manner that it cannot rotate relative to the device and in which the bearing plate (7) extends out of the opening in the lower side of the swivel bearing pot and is connected in a fixed manner to the caster fork (2), characterized by the fact that a die-cast plug-in securing stud (9) is formed on the top of the die-cast layer (8) surrounding the swivel bearing pot (5).

7. Caster in accordance with claim 6, characterized by the fact that a transversely positioned internally threaded bush (11) is provided in the plug-in securing stud (9) into which a securing screw (12) provided on the foot (10) of the device can be screwed.

8. Caster in accordance with claim 6, characterized by the fact that a metal reinforcing stud (21) is secured to the base of the swivel bearing pot (5') and that the die-cast plug-in securing stud (9) is moulded around this metal reinforcing stud (21).

9. Caster in accordance with claims 1 to 5 with a securing plate (22) secured to the swivel bearing pot (5) and extending laterally beyond the sides of the pot for securing the swivel bearing pot to the device in such a manner that there can be no relative rotation between the swivel bearing pot and the device and where this securing plate has in its middle a trough-shaped recess (22') the base of which lies flat on the base (5') of the swivel bearing pot (5), characterized by the fact that the trough-shaped recess (22') is filled with the layer (8') of die-cast material and that this layer is connected via through holes (22'') provided in the securing plate (22) with the other part (8'') of the die-cast layer, namely that surrounding the swivel bearing pot wall (5'').

10. Caster in accordance with claims 1 to 5 with the swivel bearing pot (5) secured to the caster fork (2) and the swivel bearing plate (7) extending out of the opening at the top of the swivel bearing pot for connecting to the device in such a manner that it cannot rotate relative to the latter, characterized by the fact that the die-cast layer (8''') surrounding the swivel bearing pot wall (5'') also embraces the caster fork saddle (2').

11. Caster in accordance with claim 10, characterized by the fact that the die-cast layer has an area (8^{IV}) beneath the saddle (2') of the caster fork, this area being connected with the other area (8''') of the die-cast layer via through holes (2'') provided in the caster fork saddle (2').

12. Caster in accordance with claim 10, characterized by the fact that the caster fork (2''') is formed in whole or in part of die-cast material and is injection moulded or cast together with the die-cast layer (8^{V}) surrounding the swivel bearing pot (5).

## Revendications

1. Galet-guide pour l'équipement d'appareils pouvant alors être déplacés, tels que des conteneurs d'ordures, des lits d'hôpital, et autres appareils semblables. Doté d'une fourche (2) de galet-guide, laquelle fourche (2) supporte une roue de roulement (1) et porte sur son dos (2') un palier de pivotement (3) devant être fixée sur l'appareil. Le palier de pivotement (3) se compose d'une écuelle (5) de palier de pivotement et d'une plaque d'appui de pivotement (7) logée dans l'écuelle (5) et maintenue en mouvement pivotant par le biais de deux couronnes de roulement à billes (6,6'). L'écuelle (5) du palier de pivotement - à base de tôle d'acier et enveloppée, tout au moins au niveau de sa paroi en grande partie cylindrique (5''), d'une couche extérieure de renforcement (8) - est caractérisée par le fait que la couche extérieure de renforcement se compose d'une couche de coulée sous pression (8) à base de matière synthétique ou d'alliage à métal léger, laquelle couche de coulée sous pression (8) est apposée sur l'écuelle (5) du palier de pivotement par le procédé de moulage par injection ou par la technique de coulée sous pression.

2. Galet-guide conformément à la spécification 1, caractérisé par le fait que la couche de coulée sous pression (8) apposée sur l'écuelle (5) du palier de pivotement est à base de matière synthétique thermoplastique, en particulier de polyamide, de polypropylène, de polychlorure de vinyle ou de polythène.

3. Galet-guide conformément à la spécification 1, caractérisé par le fait que la couche de coulée sous pression (8) apposée sur l'écuelle (5) du palier de pivotement est à base alliage d'aluminium, par exemple de Zamak.

4. Galet-guide conformément aux spécifications 1 à 3, caractérisé par le fait que des éléments de raccord pour le montage de dispositifs d'arrêt du galet-guide - à l'exemple de couronnes dentées (14) ou de saillies de palier (24) pour des leviers d'arrêt (15 ou 26) - sont façonnés sur la couche de coulée sous pression (8'').

5. Galet-guide conformément aux spécifications 1 à 4, caractérisé par le fait que la couche de coulée sous pression (8) enveloppe également le fond (5') de l'écuelle du palier de pivotement (5).

6. Galet-guide conformément aux spécifications 1 à 5, dans le cadre duquel l'écuelle (5) du palier de pivotement doit être fixé à l'appareil de façon à résister à la torsion et la plaque d'appui de pivotement (7) dépassant de l'ouverture inférieure de l'écuelle (5) est reliée solidement à la fourche (2) du galet-guide. Caractéristique: sur la partie supérieure de la couche de coulée sous pression (8) enveloppant l'écuelle (5) du palier de pivotement est façonné un tenon de fixation enfichable (9) à base de coulée sous pression.

7. Galet-guide conformément à la spécification 6. Caractéristique: dans le tenon de fixation enfichable (9) façonné est logée de façon transversale une douille taraudée (11) destinée au vissage d'une vis de fixation (12) prévue dans le socle (10) de l'appareil.

8. Galet-guide conformément à la spécification 6. Caractéristique: dans le tenon de fixation enfichable (9) façonné est logé un tenon de renforcement (21) métallique façonné parallèlement et fixé sur le fond (5') de l'écuelle du palier de pivotement.

9. Galet-guide conformément aux spécifications 1 à 5, avec une plaque de fixation (22) fixée sur l'écuelle (5) du palier de pivotement et dépassant celle-ci de façon latérale, devant servir au montage en résistance de torsion de l'écuelle (5) sur le côté de l'appareil. Cette plaque de fixation (22) présente en son milieu un enfoncement en forme d'auge (22') qui repose à plat sur le fond (5') de l'écuelle du palier de pivotement. Caractéristique: l'enfoncement en forme d'auge (22') est rempli par la couche de coulée sous pression (8'), et celle-ci est reliée à la partie restante (8'') de la couche de coulée sous pression enveloppant la paroi (5'') de l'écuelle du palier de pivotement par le biais d'orifices de passage (22') répartis sur la plaque de fixation (22).

10. Galet-guide conformément aux spécifications 1 à 5, dans le cadre duquel l'écuelle (5) du palier de pivotement est fixé à la fourche (2) du galet-guide et la plaque d'appui de pivotement (7) dépassant de l'ouverture supérieure de l'écuelle (5) doit être reliée à l'appareil en résistance de torsion. Caractéristique: la couche de coulée sous pression (8''') enveloppant la paroi (5'') de l'écuelle du palier de pivotement recouvre également le dos (2') de la fourche du galet-guide.

11. Galet-guide conformément à la spécification 10. Caractéristique: la couche de coulée sous pression possède une partie (8^{iv}) s'étendant par le bas également vers l'arrière sur le dos (2') de la fourche du galet-guide et reliée à la partie restante (8''') de la couche de coulée sous pression par le biais des orifices de passage (2'') répartis sur le dos (2') de la fourche du galet-guide.

12. Galet-guide conformément à la spécification 11. Caractéristique: la fourche (2''') du galet-guide se compose entièrement ou partiellement de coulée sous pression et est moulée par injection ou sous pression ensemble et de façon uniforme avec la couche de coulée sous pression (8^{v}) enveloppant l'écuelle (5) du palier de pivotement.
